# EUROPEAN PATENT SPECIFICATION

(11) **EP 0 806 603 B1**
(45) Date of publication and mention of the grant of the patent: **09.07.2003**
(21) Application number: 97300189.4
(22) Date of filing: 14.01.1997
(51) Int. Cl.: F16N 11/10

(54) **Method and apparatus for automatically feeding lubricating oil using microcomputer**
Verfahren und Einrichtung zum automatischen Zuführen von Schmiermittel unter Benutzung eines Mikrokomputers
Procédé et dispositif de distribution automatique des lubrifiants utilisant un micro-ordinateur

(30) Priority: 06.05.1996 KR 9614738
(43) Date of publication of application: 12.11.1997
(73) Proprietor: Korea Lube-Tech Co., Ltd., Paju-city, Kyungki-do 413-830 (KR)
(72) Inventor: Ynag, Yun Jong, Yangcheon-ku, Seoul (KR)
(74) Representative: Mounteney, Simon James

(56) References cited:
- EP-A- 0 278 138
- US-A- 5 135 499
- US-A- 5 381 874
- US-A- 5 425 706

## Description

### BACKGROUND OF THE INVENTION

### 1. Field of the Invention

The present invention relates to a method and apparatus for automatically feeding lubricating oil to bearing portions of various machine parts (US 5 381 874). In particular, the present invention relates to a method and apparatus for automatically feeding lubricating oil using a microcomputer whereby when a predetermined time for discharging lubricating oil terminates, a discharge mode for a minimum time, for example, for one month, is set to completely discharge the remaining lubricating oil, and the predetermined discharge time is displayed by a display device.

### 2. Description of the Prior Art

Conventionally, an automatic lubricating oil feeding apparatus using gas pressure has been proposed to automatically feed lubricating oil such as grease to bearing portions of the machine parts of various industrial equipments.

Such an automatic lubricating oil feeding apparatus has advantages in that it can continuously feed lubricating oil to places which need the lubricating oil such as bearings without the necessity of a manual feeding operation.

According to the conventional lubricating oil feeding apparatus, the lubricating oil is automatically discharged by a piston which moves downward by a diaphragm. This diaphragm is extended to move the piston by gas pressure provided by an electrochemical reactor. The gas reaction time and the gas pressure of the electrochemical reactor are adjusted by a control circuit, and thus the discharge of lubricating oil can be automatically performed extending from several months to several tens of months.

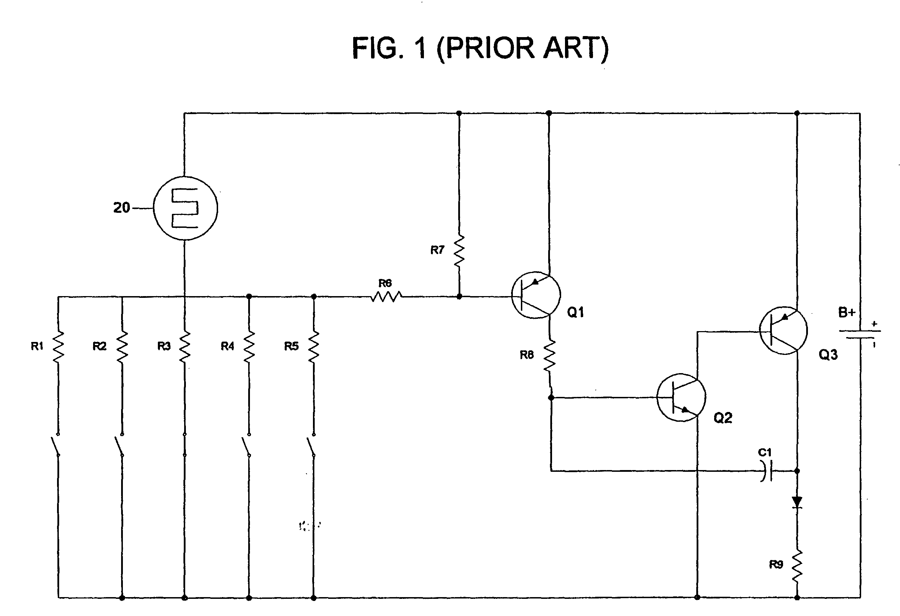

FIG. 1 is a schematic circuit diagram of a conventional lubricating oil feeding apparatus. Referring to FIG. 1, between an electrochemical reactor 20 and a driving power supply B⁺, a plurality of resistors R1 to R5 and a plurality of switches S1 to S5 are connected in series to adjust the current flowing to the electrochemical reactor 20. A display section for visually indicating the operation of the electrochemical reactor 20 is composed of a light-emitting diode LED, driving transistors Q1 to Q3, and resistors.

According to the conventional lubricating oil feeding apparatus as constructed above, the amount of current applied to the electrochemical reactor 20 is varied in accordance with a specific resistance determined by the on/off state of the switches S1 to S5 to adjust the reaction time of the electrochemical reactor (e.g., gas chamber) 20. The reaction time corresponds to the lubricating oil discharge time, and is extended from one month to several months. During the reaction time, the light-emitting diode is turned on to display the operating state of the electrochemical reactor. The electrochemical reaction time is adjusted by controlling the current consumption of the electrochemical reactor and the current consumption is controlled according to the resistance selected by the switches S1 to S5. Accordingly, the conventional apparatus has drawbacks in that the environmental conditions such as the condition inside the bearing portion, the temperature change, etc., cannot be reflected in controlling the lubricating oil discharge time. Further, as time goes by, the internal resistance of the electrochemical reactor (e.g., gas chamber) may vary, causing the current consumption of the reactor also to vary. This causes the proper and accurate discharge of lubricating oil in time and in amount not to be achieved.

Also, according to the conventional apparatus, the predetermined discharge time can be recognized only by checking the on/off state of the switches to cause inconvenience in use. Further, in the event that a portion of the lubricating oil still remains due to the external or internal factors when the predetermined discharge time elapses, a user cannot identify whether or not the amount of the remaining lubricating oil is sufficient for setting of the discharge time again, and thus he can but discard the remaining oil.

### SUMMARY OF THE INVENTION

It is an object of the present invention to solve the problems involved in the prior art, and to provide a method and apparatus for automatically feeding lubricating oil whereby a desired discharge time of lubricating oil can be easily determined using a microcomputer.

It is another object of the present invention to provide a method and apparatus for automatically feeding lubricating oil which can display the determined discharge time of lubricating oil by means of a liquid crystal display to provide convenience in use.

It is still another object of the present invention to provide a method and apparatus for automatically feeding lubricating oil which can guide an accurate lubricating oil discharge operation with respect to a predetermined discharge time by compensating for the change of the internal resistance of the electrochemical reactor during the discharge time.

It is still another object of the present invention to provide a method and apparatus for automatically feeding lubricating oil which can completely discharge the remaining lubricating oil by automatically setting a discharge mode for a minimum time when the determined discharge time elapses.

In one aspect of the present invention, there is provided an automatic lubricating oil feeding apparatus using an electrochemical reactor, the apparatus comprising:
mode selection means for selecting a discharge mode of lubricating oil;
a microcomputer for computing a discharge time according to the selected mode and providing to the electrochemical reactor a control signal corresponding to the computed discharge time; and
a liquid crystal display for displaying the selected mode and/or the computed discharge time under the control of the microcomputer.

In another aspect of the present invention, there is provided a method of automatically feeding lubricating oil using an electrochemical reactor, the method comprising the steps of:
determining a discharge time of lubricating oil for each discharge mode to be set;
controlling the operation of the electrochemical reactor in accordance with the determined discharge time;
detecting completion of the set discharge mode; and
setting a discharge mode for a minimum discharge time when the set discharge mode is completed, to rapidly discharge the remaining lubricating oil.

### BRIEF DESCRIPTION OF THE DRAWINGS

The above objects, other features, and advantages of the present invention will become more apparent by describing the preferred embodiment thereof with reference to the accompanying drawings, in which:
FIG. 1 is a schematic circuit diagram of a conventional lubricating oil feeding apparatus.
FIG. 2 is a block diagram of the lubricating oil feeding apparatus according to the present invention.
FIG. 3 is an algorithm diagram explaining the lubricating oil feeding method according to the present invention.
FIG. 4 is a waveform diagram explaining the output control timing according to the present invention.

### DETAILED DESCRIPTION OF THE PREFERRED EMBODIMENTS

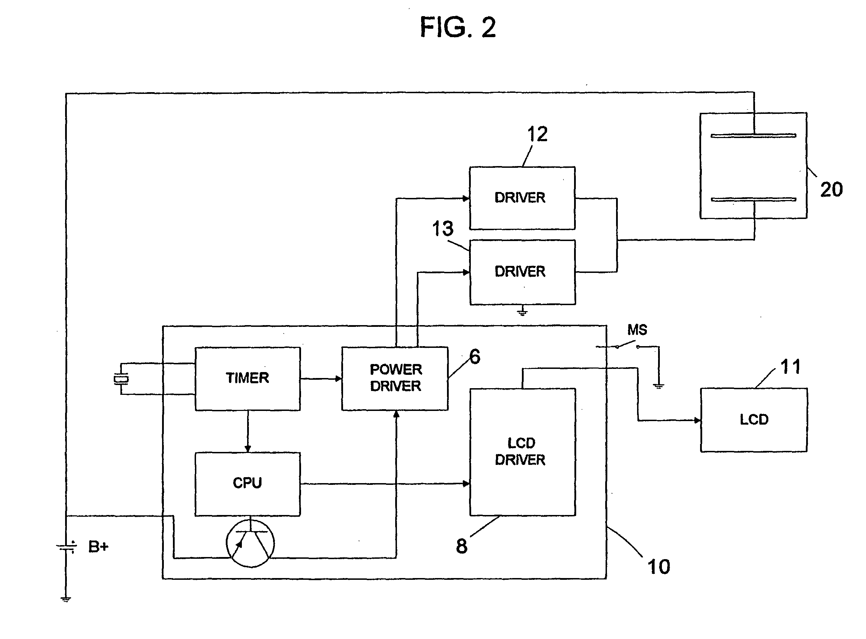

Referring to FIG. 2, the automatic lubricating oil feeding apparatus according to the present invention includes a microcomputer 10 capable of storing and computing input data and performing an input/output control, a mode switch MS for determining and inputting discharge time data of lubricating oil to the microcomputer 10, a liquid crystal display (LCD) 11 which is driven by an LCD driver 8 provided in the microcomputer 10, a purge driver 12 which is driven by the maximum output of a power driver 6 provided in the microcomputer 10, a driver 13 which is driven by an output of the power driver 6 corresponding to a selected mode, and an electrochemical reactor 20 receiving its operating power supply B⁺ through the purge driver 12 and the driver 13.

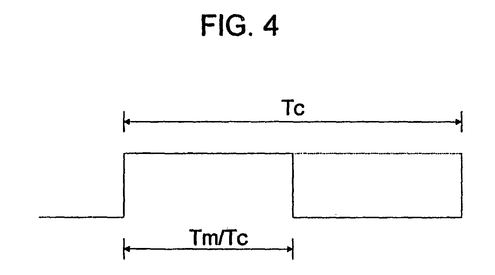

The operation of the lubricating oil feeding apparatus according to the present invention as constructed above will be explained with reference to FIGs. 2 to 4.

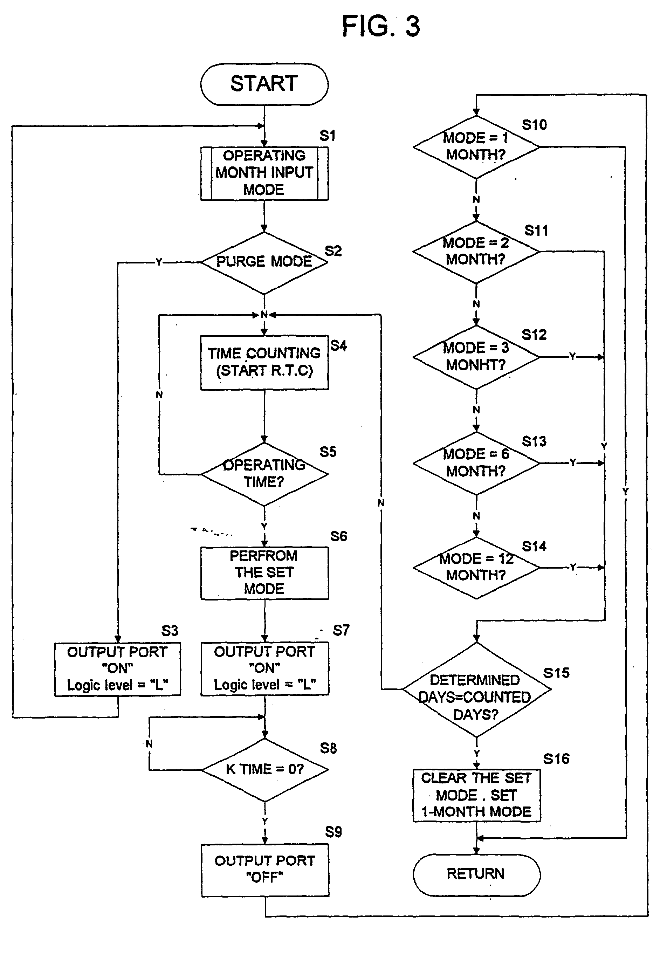

The lubricating oil feeding apparatus according to the present invention is properly installed in a required machine parts. If a user manipulates the mode switch MS to select a discharge mode, the microcomputer 10 performs an operating month input mode (step S1 in FIG. 3), for example, for selecting one of 1, 2, 3, 6, and 12-month modes. If it is determined that the selected mode is a purge mode (step S2 in FIG, 3), the microcomputer 10 turns on its output port (step S3 in FIG. 3) to operate the electrochemical reactor 20 with its maximum electrochemical reaction level. Here, the term "on-state of the output port" means a 'LOW' logic level.

As the output port is turned on, the output of the power driver 6 is applied to the purge driver 12, and the power supply B⁺ flows to the driver 12 through the electrochemical reactor 20, causing the lubricating oil to be discharged.

Meanwhile, if the operating month is inputted instead of determining the purge mode, the microcomputer 10 performs its control operation in accordance with the corresponding input mode.

Specifically, if the operating time reaches (step S5 in FIG. 3) as a real time counting is performed (step S4 in FIG. 3), a tick clock is generated in the microcomputer 10 and the microcomputer 10 performs the determined mode (step S6 in FIG. 3), turning on its output port (step S7 in FIG. 3). Thereafter, the microcomputer 10 detects whether or not the output time per unit time of each mode is zero (i.e., K time=0) (step S8 in FIG. 3), and if it is detected that the K time is zero, the microcomputer 10 turns off its output port (step S9 in FIG. 3) to limit the output of the driver 12 or 13. Here, the term "off-state of the output port" means a 'HIGH' logic level.

Accordingly, the reaction time of the electrochemical reactor 20 is controlled in such a manner that, in order to control the discharge amount of the lubricating oil, the operating time for each selected mode, i.e., the K time, is determined by the amount of the current consumption of the electrochemical reactor 20, which is obtained by computing an expression I×TMöTC, where I is the amount of current, TC is a unit time, and TM is the output time according to the selected mode.

If it is assumed that the K time for the 1-month mode is Xt, the K times for other modes can be obtained as the following table, respectively.

**Table**

| MODE | K TIME | DETERMINED DAYS |
|---|---|---|
| 1 MONTH | K = Xt | 30 DAYS |
| 2 MONTHS | K = Xt * 1/2 * EFFICIENCY | 60 DAYS |
| 3 MONTHS | K = Xt * 1/3 * EFFICIENCY | 90 DAYS |
| 6 MONTHS | K = Xt * 1/6 * EFFICIENCY | 180 DAYS |
| 12 MONTHS | K = Xt * 1/12 * EFFICIENCY | 360 DAYS |

In the table, the K time for each mode is calculated by multiplying Xt by the efficiency of the gas chamber which is converted from the specific resistance value of the gas chamber in accordance with the passed time.

Thereafter, if it is determined that the counted days become equal to the predetermined days (step S15 in FIG. 3), the set discharge mode is cleared, and the discharge mode for the minimum time, i.e., for one month, is set under the control of the microcomputer 10 (step.S16 in FIG. 3), so that the remaining lubricating oil is completely discharged during the minimum time.

At this time, the power driver 6 and the driver 13 operate for the one-month mode until the power supply B⁺ being supplied thereto is expired.

While the discharge operation is performed, the set mode is displayed on the LCD as the number of discharge months, and thus a user can easily recognize the discharge months of the present mode.

While the present invention has been described and illustrated herein with reference to the preferred embodiment thereof, it will be understood by those skilled in the art that various changes in form and details may be made therein without departing from the spirit and scope of the invention.

## Claims

1. An automatic lubricating oil feeding method using an electrochemical reactor, the method comprising the steps of:
determining a discharge time of lubricating oil for each discharge mode to be set;
controlling the operation of the electrochemical reactor in accordance with the determined discharge time;
detecting completion of the set discharge mode; and
setting a discharge mode for a minimum discharge time when the set discharge mode is completed, to rapidly discharge the remaining lubricating oil.

2. An automatic lubricating oil feeding apparatus, the apparatus comprising:
a mode selection switch for selecting a discharge mode of lubricating oil;
a microcomputer for computing a discharge time according to the selected mode and providing to the electrochemical reactor a control signal corresponding to the computed discharge time; and
a display for displaying the selected mode and/or the computed discharge time under the control of the microcomputer,
**caracterized in that** the display is a liquid crystal display and in that the apparatus uses an electrochemical reactor.

3. An automatic lubricating oil feeding apparatus as claimed in claim 2, further comprising:
an liquid crystal display driver for driving the liquid crystal display under the control of the microcomputer;
a purge driver for driving the electrochemical reactor with a maximum output under the control of the microcomputer; and
a driver for driving the electrochemical reactor in accordance with the selected mode under the control of the micro computer.

## Patentansprüche

1. Automatisches Schmieröl-Zuführungsverfahren, das einen elektrochemischen Reaktor verwendet, wobei das Verfahren die folgenden Schritte umfasst:
Bestimmen einer Abgabezeit von Schmieröl für jeden Abgabemodus, der eingestellt werden soll;
Steuern des Betriebs des elektrochemischen Reaktors in Übereinstimmung mit der bestimmten Abgabezeit;
Erfassen eines Abschlusses des eingestellten Abgabemodus;
Einstellen eines Abgabemodus für eine minimale Abgabezeit, wenn der eingestellte Abgabemodus abgeschlossen ist, um das verbleibende Schmieröl schnell abzugeben.

2. Automatische Schmieröl-Zuführungsvorrichtung, wobei die Vorrichtung umfasst:
einen Modus-Wählschalter zum Wählen eines Abgabemodus von Schmieröl;
einen Mikrocomputer zum Berechnen einer Abgabezeit gemäß dem gewählten Modus und Bereitstellen eines Steuersignals, dass der berechneten Abgabezeit entspricht, an dem elektrochemischen Reaktor;
eine Anzeige zum Anzeigen des gewählten Modus und/oder der berechneten Abgabezeit unter Steuerung des Mikrocomputers,
**dadurch gekennzeichnet, dass** die Anzeige eine Flüssigkristallanzeige ist und dass die Vorrichtung einen elektrochemischen Reaktor verwendet.

3. Automatische Schmieröl-Zuführungsvorrichtung nach Anspruch 2, ferner umfassend:
einen Flüssigkristallanzeige-Ansteuerer zum Ansteuern der Flüssigkristallanzeige unter der Steuerung des Mikrocomputers;
einen Ausräumungs-Ansteuerer zum Ansteuern des elektrochemischen Reaktors mit einem maximalen Ausgang unter der Steuerung des Mikrocomputers; und
einen Ansteuerer zum Ansteuern des elektrochemischen Reaktors in Übereinstimmung mit dem gewählten Modus unter der Steuerung des Mikrocomputers.

## Revendications

1. Procédé d'alimentation automatique en huile de lubrification utilisant un réacteur électrochimique, le procédé comprenant les étapes de:
détermination d'un temps de décharge d'huile de lubrification pour chaque mode de décharge à établir;
commande du fonctionnement du réacteur électrochimique conformément au temps de décharge déterminé;
détection de la fin du mode de décharge établi; et
établissement d'un mode de décharge pour un temps de décharge minimum lorsque le mode de décharge établi est fini, afin de décharger rapidement l'huile de lubrification restante.

2. Appareil d'alimentation automatique en huile de lubrification, l'appareil comprenant:
un commutateur de sélection de mode pour sélectionner un mode de décharge d'huile de lubrification;
un micro-ordinateur pour calculer un temps de décharge conformément au mode sélectionné et pour appliquer sur le réacteur électrochimique un signal de commande qui correspond au temps de décharge calculé; et
un affichage pour afficher le mode sélectionné et/ou le temps de décharge calculé sous la commande du micro-ordinateur,
**caractérisé en ce que** l'affichage est un affichage à cristaux liquides et **en ce que** l'appareil utilise un réacteur électrochimique.

3. Appareil d'alimentation automatique en huile de lubrification selon la revendication 2, comprenant en outre:
un dispositif de pilotage d'affichage à cristaux liquides pour piloter l'affichage à cristaux liquides sous la commande du micro-ordinateur;
un dispositif de pilotage de purge pour piloter le réacteur électrochimique à l'aide d'une sortie maximum sous la commande du micro-ordinateur; et
un dispositif de pilotage pour piloter le réacteur électrochimique conformément au mode sélectionné sous la commande du micro-ordinateur.
